# Europäisches Patentamt
# European Patent Office
# Office européen des brevets

(11) Publication number: **0 072 389**
**B1**

(12) **EUROPEAN PATENT SPECIFICATION**

(45) Date of publication of patent specification: **18.06.86**

(51) Int. Cl.⁴: **G 11 B 5/60**

(21) Application number: **82102223.3**

(22) Date of filing: **18.03.82**

(54) **Self-loading magnetic head air bearing slider.**

(30) Priority: **17.08.81 US 293813**

(43) Date of publication of application:
**23.02.83 Bulletin 83/08**

(45) Publication of the grant of the patent:
**18.06.86 Bulletin 86/25**

(84) Designated Contracting States:
**DE FR GB IT NL**

(56) References cited:
**EP-A-0 007 548**
**FR-A-2 255 670**
**US-A-3 764 756**
**US-A-3 956 770**

**PATENTS ABSTRACTS OF JAPAN, vol. 4, no. 156(P-34)(638), 31st October 1980, page 158P34**
**IEEE TRANSACTIONS ON MAGNETICS, vol. MAG-16, no. 5, September 1980, pages 785-787, New York, USA, T. NAKANISHI et al.: "Floating thin film head fabricated by ion etching method"**

(73) Proprietor: **International Business Machines Corporation**
**Old Orchard Road**
**Armonk, N.Y. 10504 (US)**

(72) Inventor: **Deckert, Kenneth Laurel**
**1749 Hudson Drive**
**San Jose California 95124 (US)**

(74) Representative: **Ekström, Gösta E. et al**
**IBM Svenska AB Patent Operations Box 962**
**S-181 09 Lidingö (SE)**

## Description

This invention relates to self-loading magnetic head air bearing sliders.

Magnetic head air bearing sliders are described in U.S. 3,855,625, DE—2451210, and FR—2255670 and GB—1440416. The sliders are formed with spaced side rails and a cross rail connecting the side rails. A taper flat section or stepped section is formed at the leading edge of each rail, and a rectangular recessed section is formed between the side rails. Magnetic transducers are located at the trailing edge of the slider at the rail areas.

This invention seeks to provide improved stability for a flying magnetic head slider. It further seeks to reduce the problem of head-to-disk stiction, and to provide a magnetic head air bearing slider that is less sensitive to variations in disk surface topography and disk rotary speed.

A self-loading magnetic head contact slider having curved contoured surfaces is described in IBM Technical Disclosure Bulletin, Vol. 13, No. 9, February 1971, page 2507. The slider described has three separate pads, with one pad being at the rear. The transducer in the rear pad contacts the medium.

A head slider according to the precharacterising part of claim 1 is known from JP—A—55-105857. According to JP—A—55-105857 the point with the minimum spacing between the slider and the recording medium is a point other than the trailing edge.

In a self-loading magnetic head air bearing slider according to this invention, the convex curved shape is such that minimum spacing between the slider and a moving magnetic medium occurs at the trailing end.

The invention is defined in claim 1; and how it can be carried into effect is hereinafter particularly described with reference to the accompanying drawings, in which:

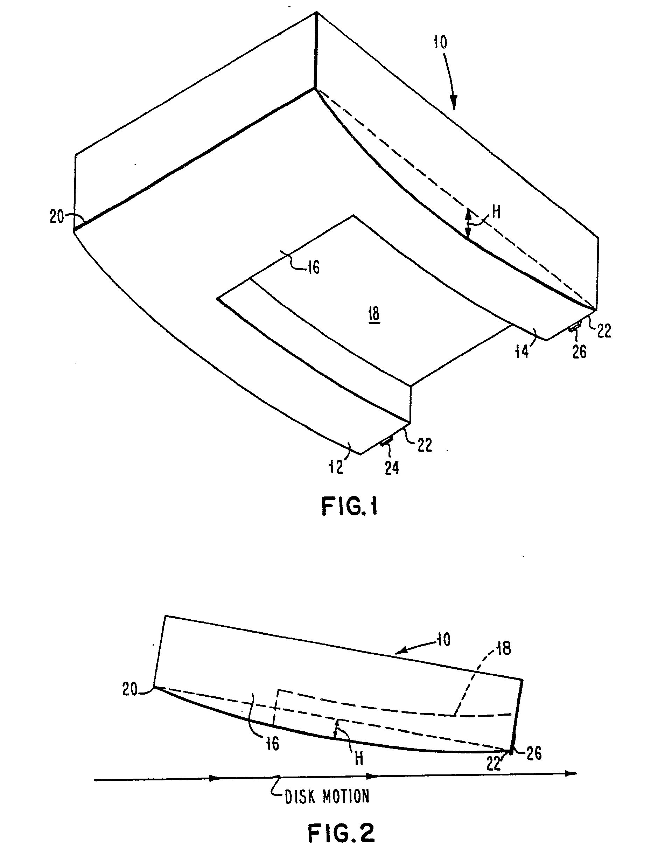

FIGURE 1 is a perspective front bottom view of an air bearing slider, according to this invention;

FIGURE 2 is a side elevational view of the slider of Figure 1; and

FIGURE 3 is a pressure profile representation indicating distribution of pressure, as measured along the air bearing surface of the slider.

The air bearing surface of a magnetic head slider 10 is formed with two side rails 12 and 14, and a front connecting section 16 joining the two side rails. The inner sides of the two rails and front section border on a recessed section 18 that is formed by etching and has a continuously curved convex shape in the longitudinal direction. The recessed section 18 extends to the trailing end of the air bearing surface of the slider and is open at the trailing end. Magnetic transducers 24 and 26, preferably of the thin film type, are deposited at the trailing edge of each rail.

The side rails are lapped or ground so that the surfaces of the rails 12 and 14 and front section are shaped to be convex curvilinear in longitudinal section from the leading edge 20 to the trailing edge 22. The surfaces are flat in transverse section. The convex curvature of the crown-shaped rails and front section may be parabolic or cylindrical, preferably having a crown height H in the range of 0.75 to 1.25 microns. Preferably, the crown height/length ratio is in the range $1.875 \times 10^{-4}$ to $3.125 \times 10^{-4}$ between the leading and trailing edges. The curvilinear surface, in combination with the etched recessed section, determines the flying height and attitude of the head slider relative to a moving magnetic medium, such as a rotating disk.

In one implementation, the crown height of the rails is about 1 micron, the slider width is about 3 mm, the slider length is about 4 mm, the side rails are 2.6 mm in length and 0.4 mm in width, the front section is 1.4 mm long from the leading end of the slider to the beginning of the recessed section, and the recessed section is about 10 microns in depth.

The curved surface is formed by lapping or grinding and the recessed section formed thereafter by etching.

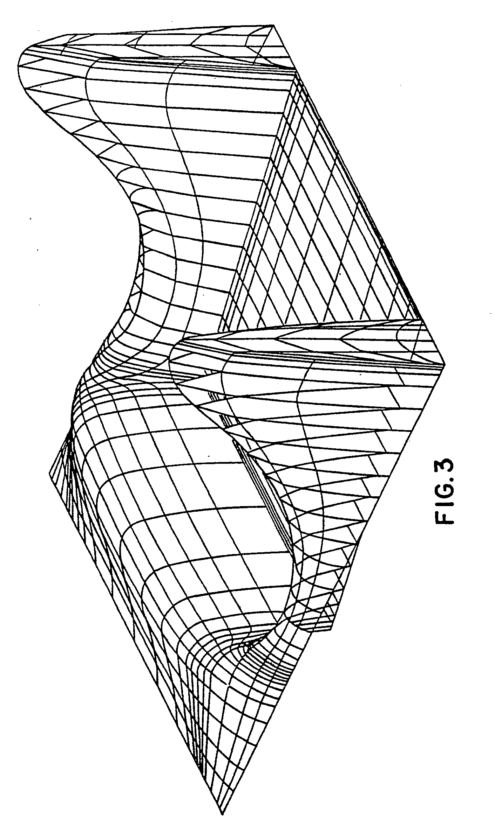

With this design, stiction of the air bearing head slider to a rotating magnetic disk is eliminated during start-stop operation. The flying height of the air bearing slider is less sensitive to variations of disk topography and experiences less change from the inner diameter to the outer diameter of a disk. Improved stability of the slider is realized due to the shape of the pressure profile which has three peaks, as depicted in Fig. 3, one across the trailing part of the front section and two at the trailing ends of the side rails. By eliminating tapered corners, as used in the prior art, there is less chance of damage to the disk and head slider occurring as a result of random asperity contacts between a disk and the head slider.

## Claims

1. A self-loading magnetic head slider (10) comprising a front section (16) extending across the slider from a leading edge (20) thereof, side rails (12, 14) disposed longitudinally from the leading edge (20) to a trailing edge (22) of the slider along the side edges of the slider, the surface of the side rails and front section having a continuously curved convex shape in a longitudinal direction from the leading edge to the trailing edge, a recessed section (18) formed between the side rails behind the front section, and at least one magnetic transducer (26), characterized in that

the magnetic transducer (26) is deposited at the trailing edge (22) of one of the rails,

the recessed section (18) has a continuously curved convex shape in the longitudinal direction, and

the continuously curved shape of the front section, the side rails and the recessed section produce a combined pressure profile when the slider is positioned adjacent a moving magnetic medium so that the slider assumes an orientation with respect to the moving magnetic medium in which the minimum spacing between the slider and the magnetic medium occurs at the trailing edge of the slider.

2. A slider according to claim 1, in which the curved shape is cylindrical or parabolic.

3. A slider according to claim 1 or 2, in which the crown height/length ratio is in the range $1.875 \times 10^{-4}$ to $3.125 \times 10^{-4}$.

4. A slider according to claim 1 or 2, in which the crown height between the leading and trailing edges is in the range 0.75 to 1.25 microns.

5. A slider according to any preceding claim, in which the recessed section is an etched area.

6. A slider according to any preceding claim, in which the depth of the recessed section is about 10 microns.

## Patentansprüche

1. Luftkissengelagerter selbsteinstellender Gleitkörper (10) für einen Magnetkopf mit einem sich ausgehend von dessen Vorderkante (20) über den Gleitkörper erstreckenden Frontabschnitt (16), mit seitlichen Schienen (12, 14), die in Längsrichtung, ausgehend von der Vorderkante (20) bis zu einer Hinterkante (22) des Gleitkörpers entlang den Seitenkanten des Gleitkörpers vorgesehen sind, wobei die Oberflächen der seitlichen Schienen und des Frontabschnitts eine in Längsrichtung von der Vorderkante zur Hinterkante kontinuierlich gekrümmte konvexe Form aufweisen, und mit einer Vertiefung (18), die zwischen den seitlichen Schienen hinter dem Frontabschnitt ausgebildet ist, sowie mit wenigstens einem magnetischen Wandler (26), dadurch gekennzeichnet, daß

der magnetische Wandler (26) an der Hinterkante (22) einer der Schienen angeordnet ist,

daß die Vertiefung (18) eine in der Längsrichtung kontinuierlich gekrümmte konvexe Form aufweist und

daß die kontinuierlich gekrümmte Form des Frontabschnitts, der seitlichen Schienen und der Vertiefung ein kombiniertes Druckprofil erzeugen, wenn der Gleitkörper neben einem sich bewegenden magnetischen Medium positioniert wird, so daß der Gleitkörper eine Orientierung bezüglich des sich bewegenden magnetischen Mediums einnimmt, bei der der geringste Zwischenraum zwischen dem Gleitkörper und dem magnetischen Medium an der Hinterkante des Gleitkörpers auftritt.

2. Gleitkörper nach Anspruch 1, bei dem die gekrümmte Form zylindrisch oder parabolisch ist.

3. Gleitkörper nach Anspruch 1 oder 2, bei dem das Scheitelhöhe/Längenverhältnis im Bereich von $1,875 \cdot 10^{-4}$ bis $3,125 \cdot 10^{-4}$ liegt.

4. Gleitkörper nach Anspruch 1 oder 2, bei dem die Scheitelhöhe zwischen der Vorderkante und der Hinterkante im Bereich von 0,75 bis 1,25 Mikrometer liegt.

5. Gleitkörper nach einem der vorstehenden Ansprüche, bei dem die Vertiefung geätzt ist.

6. Gleitkörper nach einem der vorstehenden Ansprüche, bei dem die Vertiefung eine Tiefe von etwa 10 Mikrometer aufweist.

## Revendications

1. Patin (10) pour tête magnétique à chargement automatique comprenant une partie antérieure (16) s'étendant transversalement sur le patin à partir d'un bord avant (20) de celui-ci, des barreaux latéraux (12, 14) s'étendant longitudinalement du bord avant (20) à un bord arrière (22) du patin le long des bords latéraux du patin, la surface des barreaux latéraux et de la partie antérieure ayant une forme convexe à courbure continue dans une direction longitudinale du bord avant au bord arrière, une partie évidée (18) formée entre les barreaux latéraux derrière la partie antérieure, et au moins un transducteur magnétique (26), caractérisé en ce que

le transducteur magnétique (26) est déposé au niveau du bord arrière (22) de l'un des barreaux,

la partie évidée (18) présente une forme convexe à courbure continue dans la direction longitudinale, et

la forme à courbure continue de la partie antérieure, des barreaux latéraux et de la partie évidée produit un profil de pression combiné tel, lorsque le patin est positionné au voisinage d'un milieu magnétique mobile, que le patin prend, par rapport au milieu magnétique mobile, une orientation dans laquelle la distance minimale entre le patin et le milieu magnétique se présente au niveau du bord arrière du patin.

2. Patin selon la revendication 1, caractérisé en ce que la forme incurvée est cylindrique ou parabolique.

3. Patin selon la revendication 1 ou 2, caractérisé en ce que le rapport de la hauteur de bombement à la longueur est compris entre $1,875 \cdot 10^{-4}$ et $3,125 \cdot 10^{-4}$.

4. Patin selon la revendication 1 ou 2, caractérisé en ce que la hauteur de bombement entre les bords avant et arrière est comprise entre 0,75 et 1,25 microns.

5. Patin selon l'une quelconque des revendications précédentes, caractérisé en ce que la partie évidée est une zone gravée.

6. Patin selon l'une quelconque des revendications précédentes, caractérisée en ce que la profondeur de la partie évidée est d'environ 10 microns.

FIG.1

DISK MOTION

FIG.2

FIG.3